# EUROPEAN PATENT APPLICATION

(11) **EP 3 332 892 A1**
(43) Date of publication of application: **13.06.2018**
(21) Application number: 17204980.1
(22) Date of filing: 01.12.2017
(51) Int. Cl.: B22F 1/00, B22F 3/105, C22C 1/04, C22C 19/05, B33Y 70/00, B33Y 10/00, B33Y 30/00, B29C 64/153

(54) **MATERIALS FOR DIRECT METAL LASER MELTING**

(30) Priority: 12.12.2016 US 201615375380
(71) Applicant: General Electric Company, Schenectady, NY 12345 (US)
(72) Inventor: CUI, Yan, Greenville, SC South Carolina 29615 (US); FENG, Ganjiang, Greenville, SC South Carolina 29615 (US); KOTTILINGAM, Srikanth Chandrudu, Greenville, SC South Carolina 29615 (US); LIU, Shan, Greenville, SC South Carolina 29615 (US); SCHICK, David Edward, Greenville, SC South Carolina 29615 (US)
(74) Representative: Foster, Christopher Michael

(57) **Abstract**

A nickel alloy for direct metal laser melting is disclosed. The alloy comprising includes a powder that contains about 1.6 to about 2.8 weight percent aluminum, about 2.2 to about 2.4 weight percent titanium, about 1.25 to about 2.05 weight percent niobium, about 22.2 to about 22.8 weight percent chromium, about 8.5 to about 19.5 weight percent cobalt, about 1.8 to about 2.2 weight percent tungsten, about 0.001 to about 0.05 weight percent carbon, about 0.002 to about 0.015 weight percent boron, and about 40 to about 70 weight percent nickel. Related processes and articles (102) are also disclosed.

## Description

### BACKGROUND OF THE INVENTION

The disclosure relates generally to materials for Direct Metal Laser Melting (DMLM) techniques.

DMLM, also sometimes referred to as Selective Laser Melting (SLM), is an additive manufacturing technology capable of being used to build parts with complex geometries, however without requiring the tooling techniques common with non-additive manufacturing techniques. DMLM frequently uses 3D CAD data in a digital format combined with an energy source, typically a high-power laser in order to create three-dimensional metal or alloy parts by fusing together particles of metallic powders or powders of alloys. Due to this fact, the quality of the DMLM powder used will directly impact the physical properties and the quality of the resulting part.

Previous embodiments have utilized a number of materials for DMLM. For instance, stainless steel, aluminum, maraging (or tooling) steel, titanium alloys, and cobalt chrome have previously been utilized. However, a better DMLM powder needs to be developed.

### BRIEF DESCRIPTION OF THE INVENTION

Embodiments of the invention disclosed herein may include a nickel alloy for direct metal laser melting, the nickel alloy including: a powder including: about 1.6 to about 2.8 weight percent aluminum; about 2.2 to about 2.4 weight percent titanium; about 1.25 to about 2.05 weight percent niobium; about 22.2 to about 22.8 weight percent chromium; about 8.5 to about 19.5 weight percent cobalt; about 1.8 to about 2.2 weight percent tungsten; about 0.001 to about 0.05 weight percent carbon; about 0.002 to about 0.015 weight percent boron; and about 40 to about 70 weight percent nickel.

Embodiments of the invention may also include a method of manufacturing an article, the method including: providing a 3D design file of the article; and using a 3D printer, applying in a repeated layered fashion according to the 3D design file, an energy source to a powder, the powder comprising: about 1.6 to about 2.8 weight percent aluminum; about 2.2 to about 2.4 weight percent titanium; about 1.25 to about 2.05 weight percent niobium; about 22.2 to about 22.8 weight percent chromium; about 8.5 to about 19.5 weight percent cobalt; about 1.8 to about 2.2 weight percent tungsten; about 0.001 to about 0.05 weight percent carbon; about 0.002 to about 0.015 weight percent boron; and about 40 to about 70 weight percent nickel.

Embodiments of the invention may also include a direct metal laser melting system including: a powder; a build platform for holding at least a layer of the powder; and a 3D printer configured to apply an energy source to the powder in a repeated layered fashion according to a 3D design file of an article, wherein the powder comprises: about 1.6 to about 2.8 weight percent aluminum; about 2.2 to about 2.4 weight percent titanium; about 1.25 to about 2.05 weight percent niobium; about 22.2 to about 22.8 weight percent chromium; about 8.5 to about 19.5 weight percent cobalt; about 1.8 to about 2.2 weight percent tungsten; about 0.001 to about 0.05 weight percent carbon; about 0.002 to about 0.015 weight percent boron; and about 40 to about 70 weight percent nickel.

### BRIEF DESCRIPTION OF THE DRAWING

These and other features of the disclosure will be more readily understood from the following detailed description of the various aspects of the invention taken in conjunction with the accompanying drawings that depict various aspects of the invention.

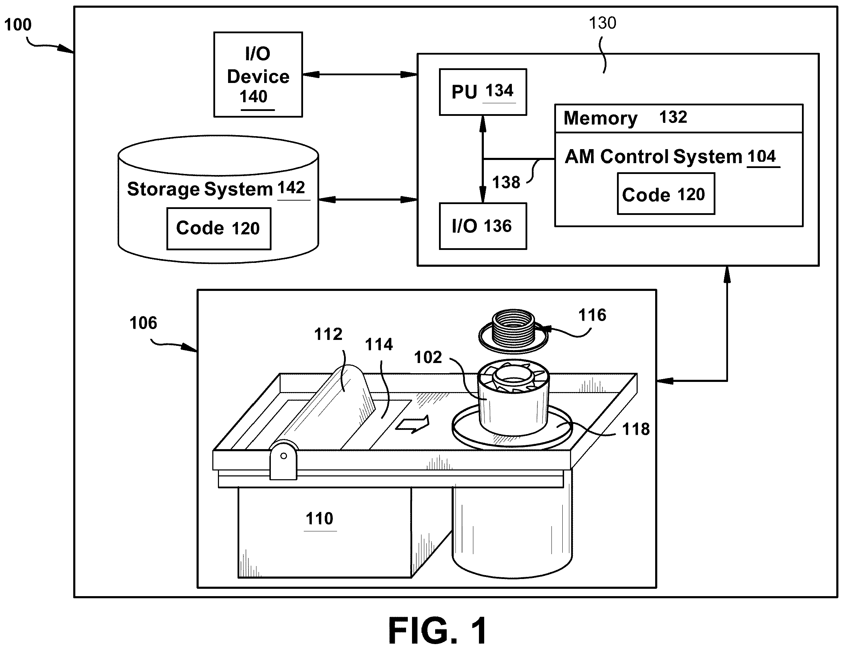

FIG. 1 shows a block diagram of an additive manufacturing process including a non-transitory computer readable storage medium storing code representative of an article according to embodiments of the disclosure.

It is noted that the drawings may not be to scale. The drawings are intended to depict only typical aspects of the invention, and therefore should not be considered as limiting the scope of the invention. In the drawings, like numbering represents like elements between the drawings. The detailed description explains embodiments of the invention, together with advantages and features, by way of example with reference to the drawings.

### DETAILED DESCRIPTION OF THE INVENTION

Disclosed herein is a nickel alloy for use in direct metal laser melting. The nickel alloy can advantageously be used for welding, sintering, and laser melting. The nickel alloy comprises a powder, the powder including aluminum, titanium, niobium, chromium, cobalt, tungsten, carbon, boron, and nickel. The unique combination of concentrations of aluminum and titanium allow for an improved characteristics pertaining to low cycle fatigue, creep strain, oxidation resistance, and hot corrosion resistance.

In some embodiments, the nickel alloy may comprise about 1.6 to about 2.8 weight percent aluminum and about 2.2 to about 2.4 weight percent titanium. This chemistry provides a good compromise between high temperature strength and degree of weldability. These and other features will become clearer in light of the descriptions below.

In some embodiments, the nickel alloy powder may further include the following concentrations; about 1.25 to about 2.05 weight percent niobium; about 22.2 to about 22.8 weight percent chromium; about 8.5 to about 19.5 weight percent cobalt; about 1.8 to about 2.2 weight percent tungsten; about 0.005 to about 0.1 weight percent carbon; about 0.002 to about 0.015 weight percent boron; and about 40 to about 70 weight percent nickel. More particularly, in some embodiments, the nickel alloy powder may include about 0.001 to about 0.05 weight percent carbon and in some embodiments even about 0.005 to about 0.01 weight percent carbon Carbon may combine with other elements in the nickel alloy powder to form carbides. These carbides strengthen the nickel alloy powder and create residual stresses within the nickel alloy powder. During 3D printing, relaxing these stresses may be desirable. If there is a resistance to relaxing these stresses, cracks may be created within the nickel alloy powder. That is, a higher carbon content within the nickel alloy powder results in greater amount of carbides and hence a propensity for cracking. Therefore, reducing the carbon content low helps prevent cracking. During other manufacturing processes, such as investment casting, the amount of carbon is not of the same concern as in 3D printing as cracking issues during investment casting is not typically caused by a greater amount of carbon or carbides.

In some embodiments, the nickel alloy powder includes small particles. For instance, the particles may be equal to or less than approximately 44 microns in size. This size parameter assists in the ability to be used for DMLM due to the heat source and ease of melting or sintering the particles of the powder. In a further embodiment, the particles may be more than or equal to approximately 10 microns in diameter. As should be understood, these size ranges may vary by 5 microns and particles of the powder can be synthesized within the size range, or may be filtered to a specific size using any now known or later developed technique. In some embodiments, a specific size sieve may be used to filter the particles, and in some instances, a largest size sieve and a smallest size sieve may be utilized in order to create an upper limit and a lower limit to the diameter of the particles of the nickel alloy powder.

In further embodiments, the above disclosed nickel alloy powder is used in a method of manufacturing an article. In particular, the method may include providing a 3D design file of the article. Then, using a 3D printer, the above described alloy powder is applied in a repeated layered fashion and an energy source is applied to the powder. As discussed above, the powder used in the manufacturing process produces an article which has a low cycle fatigue characteristic as measured by a strain range percentage and a number of cycles to crack initiation. The article also has a low creep strain characteristic, a high oxidation resistance characteristic, and a high hot corrosion resistance characteristic. Articles according to embodiments of the present invention, due to these characteristics, are stronger than previous alloys such as, but not limited to, HastX, IN617, and IN625.

The article of the manufacturing process can be used in a number of applications. For instance, the article may be used as a component of a turbine. The article can be used for first stage and later stage turbine nozzle applications and for use in large buckets for turbines.

To illustrate an example additive manufacturing process such as DMLM, FIG. 1 shows a schematic/block view of an illustrative computerized additive manufacturing system 100 for generating an article 102. In this example, system 100 is arranged for DMLM. It is understood that the general teachings of the disclosure are equally applicable to other forms of additive manufacturing. Article 102 is illustrated as a double walled turbine element; however, it is understood that the additive manufacturing process can be readily adapted to manufacture any article. AM system 100 generally includes a computerized additive manufacturing (AM) control system 104 and an AM printer 106. AM system 100, as will be described, executes code 120 that includes a set of computer-executable instructions defining article 102 to physically generate the object using AM printer 106. Each AM process may use different raw materials in the form of, for example, fine-grain powder, liquid (e.g., polymers), sheet, etc., a stock of which may be held in a chamber 110 of AM printer 106, including the above disclosed nickel alloy powder. As illustrated, an applicator 112 may create a thin layer of raw material 114 spread out as the blank canvas from which each successive slice of the final object will be created. In other cases, applicator 112 may directly apply or print the next layer onto a previous layer as defined by code 120, e.g., where the material is a polymer. In the example shown, a laser or electron beam 116 fuses particles for each slice, as defined by code 120. Various parts of AM printer 106 may move to accommodate the addition of each new layer, e.g., a build platform 118 may lower and/or chamber 110 and/or applicator 112 may rise after each layer.

AM control system 104 is shown implemented on computer 130 as computer program code. To this extent, computer 130 is shown including a memory 132, a processor 134, an input/output (I/O) interface 136, and a bus 138. Further, computer 130 is shown in communication with an external I/O device/resource 140 and a storage system 142. In general, processor 134 executes computer program code, such as AM control system 104, that is stored in memory 132 and/or storage system 142 under instructions from code 120 representative of article 102, described herein. While executing computer program code, processor 134 can read and/or write data to/from memory 132, storage system 142, I/O device 140 and/or AM printer 106. Bus 138 provides a communication link between each of the components in computer 130, and I/O device 140 can comprise any device that enables a user to interact with computer 140 (e.g., keyboard, pointing device, display, etc.). Computer 130 is only representative of various possible combinations of hardware and software. For example, processor 134 may comprise a single processing unit, or be distributed across one or more processing units in one or more locations, e.g., on a client and server. Similarly, memory 132 and/or storage system 142 may reside at one or more physical locations. Memory 132 and/or storage system 142 can comprise any combination of various types of non-transitory computer readable storage medium including magnetic media, optical media, random access memory (RAM), read only memory (ROM), etc. Computer 130 can comprise any type of computing device such as a network server, a desktop computer, a laptop, a handheld device, a mobile phone, a pager, a personal data assistant, etc.

Additive manufacturing processes begin with a non-transitory computer readable storage medium (e.g., memory 132, storage system 142, etc.) storing code 120 representative of article 102. As noted, code 120 includes a set of computer-executable instructions defining article 102 that can be used to physically generate the object, upon execution of the code by system 100. For example, code 120 may include a precisely defined 3D model of object 102 and can be generated from any of a large variety of well known computer aided design (CAD) software systems such as AutoCAD®, TurboCAD®, DesignCAD 3D Max, etc. In this regard, code 120 can take any now known or later developed file format. For example, code 120 may be in the Standard Tessellation Language (STL) which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 120 may be translated between different formats, converted into a set of data signals and transmitted, received as a set of data signals and converted to code, stored, etc., as necessary. Code 120 may be an input to system 100 and may come from a part designer, an intellectual property (IP) provider, a design company, the operator or owner of system 100, or from other sources. In any event, AM control system 104 executes code 120, article 102 into a series of thin slices that it assembles using AM printer 106 in successive layers of liquid, powder, sheet or other material. In the DMLM example, each layer is melted to the exact geometry defined by code 120 and fused to the preceding layer. Subsequently, article 102 may be exposed to any variety of finishing processes, e.g., minor machining, sealing, polishing, assembly to other part of the igniter tip, etc.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A nickel alloy for direct metal laser melting, the nickel alloy comprising:
a powder including:
1.6 to 2.8 weight percent aluminum;
2.2 to 2.4 weight percent titanium;
1.25 to 2.05 weight percent niobium;
22.2 to 22.8 weight percent chromium;
8.5 to 19.5 weight percent cobalt;
1.8 to 2.2 weight percent tungsten;
0.001 to 0.05 weight percent carbon;
0.002 to 0.015 weight percent boron; and
40 to 70 weight percent nickel.

2. The nickel alloy of claim 1, wherein the powder comprises particles of less than or equal to 44 microns in size.

3. The nickel alloy of claim 1 or 2, wherein the powder comprises particles of more than or equal to 10 microns in size.

4. A method of manufacturing an article (102), the method comprising:
providing a 3D design file of the article (102); and
using a 3D printer (106), applying in a repeated layered fashion according to the 3D design file, an energy source to a powder, the powder comprising:
1.6 to 2.8 weight percent aluminum;
2.2 to 2.4 weight percent titanium;
1.25 to 2.05 weight percent niobium;
22.2 to 22.8 weight percent chromium;
8.5 to 19.5 weight percent cobalt;
1.8 to 2.2 weight percent tungsten;
0.001 to 0.05 weight percent carbon;
0.002 to 0.015 weight percent boron; and
40 to 70 weight percent nickel.

5. The method of claim 4, wherein the powder comprises particles of less than or equal to 44 microns in size.

6. The method of claim 4 or 5, wherein the powder comprises particles of more than or equal to 10 microns in size.

7. The method of any one of claims 4 to 6, wherein the using includes welding, sintering, or laser melting.

8. The method of any one of claims 4 to 7, wherein the article (102) comprises a turbine component.

9. A direct metal laser melting system comprising:
a build platform (118) for holding at least a layer of a powder; and
a 3D printer (106) configured to apply an energy source to the powder in a repeated layered fashion according to a 3D design file of an article (102), wherein the powder comprises:
1.6 to 2.8 weight percent aluminum;
2.2 to 2.4 weight percent titanium;
1.25 to 2.05 weight percent niobium;
22.2 to 22.8 weight percent chromium;
8.5 to 19.5 weight percent cobalt;
1.8 to 2.2 weight percent tungsten;
0.001 to 0.05 weight percent carbon;
0.002 to 0.015 weight percent boron; and
40 to 70 weight percent nickel.

10. The direct metal laser melting system of claim 9, wherein the powder comprises particles of less than or equal to 44 microns in size.

11. The direct metal laser melting system of claim 9 or 10, wherein the powder comprises particles of more than or equal to 10 microns in size.

12. The direct metal laser melting system of any one of claims 9 to 11, wherein the article (102) comprises a turbine component.
